# EUROPÄISCHE PATENTSCHRIFT

(11) **EP 3 309 414 B1**
(45) Veröffentlichungstag und Bekanntmachung des Hinweises auf die Patenterteilung: **22.06.2022**
(21) Anmeldenummer: 17193868.1
(22) Anmeldetag: 28.09.2017
(51) Int. Cl.: F16B 37/06

(54) **FUNKTIONSELEMENT ZUR FLUIDDICHTEN ANBRINGUNG AN EIN BLECHTEIL, ZUSAMMENBAUTEIL UND VERFAHREN**
FUNCTIONAL ELEMENT FOR GAS-TIGHT APPLICATION TO A SHEET METAL COMPONENT, ASSEMBLED COMPONENT AND METHOD
ÉLÉMENT DE FONCTION POUR FIXATION ÉTANCHE AUX FLUIDES SUR UNE PIÈCE DE TÔLERIE, ENSEMBLE DE MONTAGE ET PROCÉDÉ

(30) Priorität: 12.10.2016 DE 102016119479
(43) Veröffentlichungstag der Anmeldung: 18.04.2018
(73) Patentinhaber: Profil Verbindungstechnik GmbH & Co. KG, 61381 Friedrichsdorf (DE)
(72) Erfinder: Ellis, Adrian, Rayleigh, Essex, SS6 8ET (GB); Humpert, Richard, 61231 Bad Nauheim (DE)
(74) Vertreter: Manitz Finsterwald Patent- und Rechtsanwaltspartnerschaft mbB

(56) Entgegenhaltungen:
- EP-A1- 1 420 174
- DE-A1-102012 003 819
- DE-A1-102015 102 174
- DE-B3-102006 028 537
- US-A1- 2015 226 253

## Beschreibung

Die vorliegende Erfindung betrifft ein Funktionselement zur fluiddichten Anbringung an ein Blechteil sowie ein Zusammenbauteil bestehend aus dem Funktionselement und dem Blechteil.

Aus der EP-2631498-B ist ein Funktionselement bekannt mit einem einen Flansch aufweisenden und einem von einer Seite des Flansches wegragenden und zum durchbrechungsfreien Einstanzen in ein Blechteil ausgelegten Abschnitt. Ferner ist das Funktionselement mit einem von einer der ersten Seite entgegengesetzten Seite des Flansches wegragenden und eine Funktion erfüllenden Schaftteil mit einer Längsachse ausgestattet, wobei der Flansch und der Abschnitt zumindest im Wesentlichen koaxial zum Schaftteil angeordnet sind. Der Abschnitt ist als hohler Zylinder ausgebildet, der mit Verdrehsicherungsmerkmalen auf seinem Aussenseite versehen ist. Der Abschnitt weist im Bereich seines freien Stirnendes auf der Innenseite vorzugsweise in einem unmittelbar zum freien Ende des Abschnitts benachbarten Bereich eine zumindest im Wesentlichen am freien Ende auslaufende, divergierende Kegelstumpfform auf, die beim Einstanzen im Blechteil der Aufweitung des Abschnitts dient.

Die der Erfindung zugrundeliegende Aufgabe besteht darin, ein Funktionselement und ein Zusammenbauteil zur Verfügung zu stellen, das preisgünstig herzustellen bzw. zu realisieren ist und das insbesondere eine fluiddichte Anbringung des Kopfteils des Funktionselements an ein einziges Blechteil sowie ein fluiddichtes Zusammenbauteil ermöglicht, wobei der Schaftteil des Funktionselements zur Durchführung einer Vielzahl von Funktionen ausgelegt sein kann, wobei besonders hohe Anforderungen an die Verdrehsicherheit der Verbindung mit dem Blechteil gestellt werden können.

Zur Lösung dieser Aufgabe wird erfindungsgemäß ein Funktionselement der oben genannten Art vorgesehen, das mit einem einen Flansch aufweisenden und einem von einer Seite des Flansches wegragenden und zum durchbrechungsfreien Einstanzen in ein Blechteil ausgelegten Abschnitt sowie einem von einer der ersten Seite entgegengesetzten Seite des Flansches wegragenden und eine Funktion erfüllenden Schaftteil mit einer Längsachse, wobei der Flansch und der Abschnitt zumindest im Wesentlichen koaxial zum Schaftteil angeordnet sind, wobei der Abschnitt als hohler Zylinder ausgebildet ist, der auf seiner inneren Mantelfläche sich parallel zur Längsrichtung erstreckenden Kerben aufweist, und der Abschnitt im Bereich seines freien Stirnendes auf der Innenseite vorzugsweise in einem unmittelbar zum freien Ende des Abschnitts benachbarten Bereich eine zumindest im Wesentlichen am freien Ende auslaufende, divergierende Kegelstumpfform aufweist, die beim Einstanzen im Blechteil der Aufweitung des Abschnitts dient wobei die Kerben eine im Querschnitt gerundete Form aufweisen, die insbesondere einem halbkreisförmigen Querschnitt entspricht.

Ferner können sich parallel zur Längsrichtung erstreckenden Kerben auch auf der äußeren Mantelfläche des Zylinders vorgesehen sein, die eine im Querschnitt gerundete Form aufweisen, die insbesondere einem halbkreisförmigen Querschnitt entspricht.

Die vorliegende Erfindung betrifft somit eine Weiterbildung des Funktionselements, des Zusammenbauteils und auch des Verfahrens gemäß der EP-2631498-B dar, bei der die Verdrehsicherungsmerkmale in der Form von Verdrehsicherungsrippen auf der Aussenseite des hohlzylindrischen Abschnitts durch Kerben auf der Innenseite des hohlzylindrischen Abschnitts ersetzt werden. Es hat sich überraschenderweise herausgestellt, dass die Verwendung von Kerben zu einer erhöhten Verdrehsicherheit führt, die mindestens zwanzig Prozent höher liegt als bei vergleichbaren Funktionselementen mit Rippen anstelle von Kerben. Die erfindungsgemäß vorgesehenen Kerben können entweder auf der inneren Mantelfläche des zylindrischen Abschnitts oder sowohl in der äußeren Mantelfläche als auch in der inneren Mantelfläche vorgesehen werden.

Ein solches Funktionselement hat somit einen aus dem Flansch und dem genannten Abschnitt bestehenden Kopfteil, der zwar in etwa ähnlich oder gleich einem Halbhohlstanzniet ausgebildet ist und daher preisgünstig herstellbar ist, der sich aber in mehreren Punkten von einem Halbhohlstanzniet unterscheidet. Stanzniete werden nämlich zur Verbindung zweier Blechteile aneinander verwendet und führen dazu, dass mindestens das eine Blechteil gelocht wird. Es kann also nicht von einer fluiddichten Verbindung gesprochenen werden. Ferner haben Stanzniete nur die Funktion, zwei Blechteile aneinander zu befestigen, während erfindungsgemäß nur ein Blechteil, das nicht gelocht werden darf, zu verwenden ist. Ferner hat das erfindungsgemäße Element eine andere Funktion als die Verbindung zweier Blechteile.

Das erfindungsgemäße Zusammenbauteil besteht aus einem Blechteil und dem erfindungsgemäßen Funktionselement und ist so ausgelegt, dass das Blechteil im Bereich des angebrachten Funktionselements im Vergleich zu der Blechteilstärke radial außerhalb des angebrachten Funktionselements eine Verdickung aufweist, dass der genannte Abschnitt im Bereich der Verdickung und am freien Ende aufgeweitet formschlüssig aufgenommen ist, ohne das Blechteil zu durchdringen, und dass das Blechmaterial sowohl außerhalb des aufgeweiteten Abschnitts als auch innerhalb dieses in Eingriff mit dem aufgeweiteten Abschnitt wie auch im Eingriff mit den Kerben steht, seien sie außerhalb oder innerhalb des aufgeweiteten Abschnitts oder sowohl außerhalb als auch innerhalb dieses Abschnitts.

Der Vollständigkeit halber wird auf folgenden zum Stand der Technik gehörenden Schriften verwiesen:
In der EP 1 420 174 wird ein Stanzniet in den Fig. 6 und 7 gezeigt, das mit Kerben an der Außenmantelfläche des Stanzabschnittes versehne ist. Dagegen sind keine Kerben auf der Innenseite des Stanzabschnitts vorgesehen. Ferner ist hier kein Funktionsabschnitt auf der Oberseite des Stanzniets vorgesehen.

In der DE 10 2015 102 174 wird ein Stanzniet offenbart, bei dem das Stanzniet zumindest teilweise aus einem Duplexstahl besteht und in den konkreten Ausführungsbeispielen ist dieser Stanzabschnitt segmentiert. Die Spalten zwischen den Segmenten können nicht mit Kerben mit einer geründeten Form verglichen werden

In der DE 10 2012 003 819 wird ein Funktionselement als Masseanschlusselement verwendet, das in einem einzigen Blechteil eingestanzt wird, allerdings ohne das Blechteil zu durchbrechen. Hier sind keine Kerben als Verdrehsicherung vorgesehen sondern Rippen.

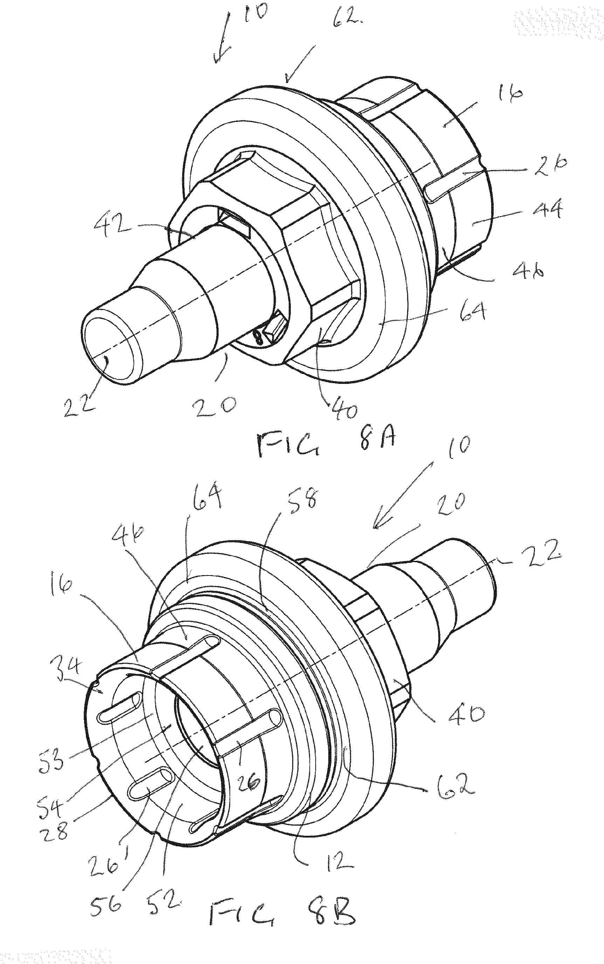

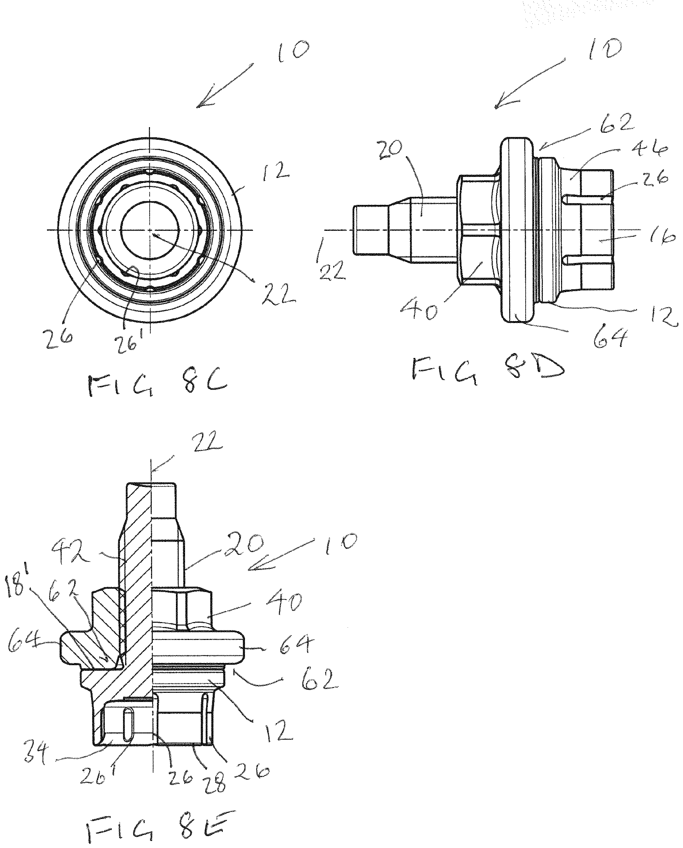

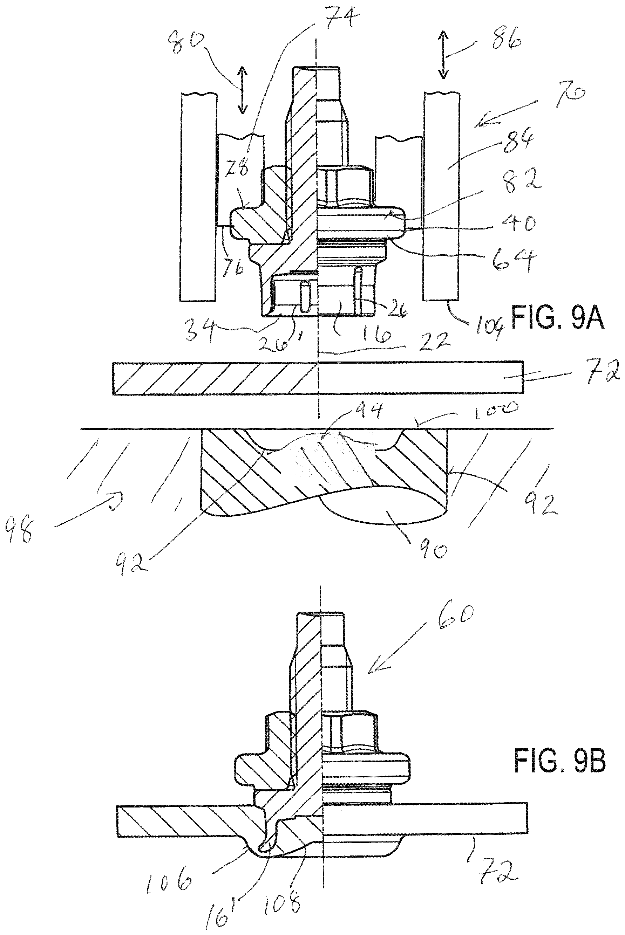

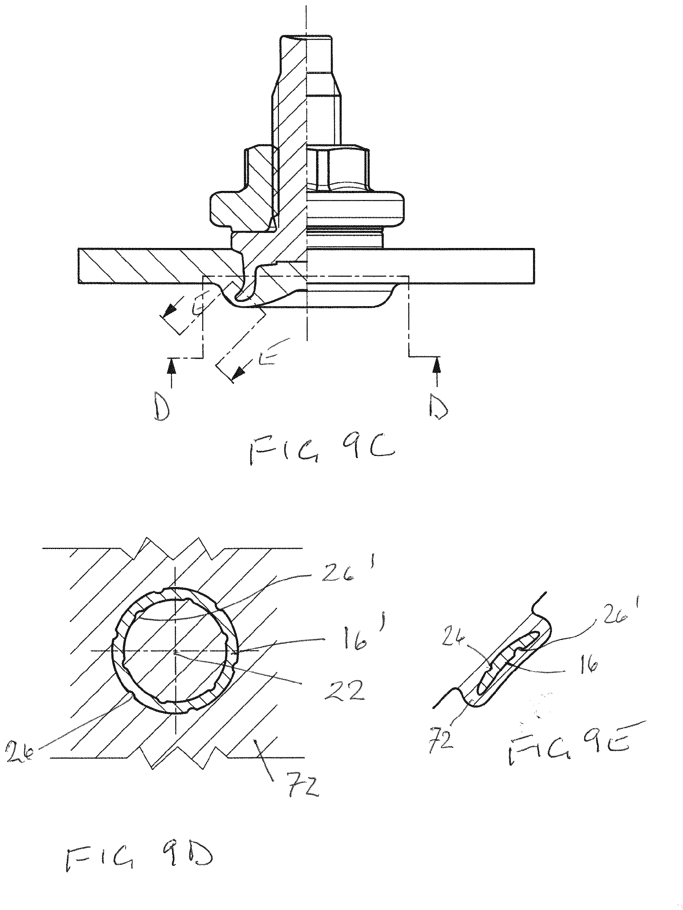

In der DE 10 2006 028 537 wird ein Stanzniet ohne Funktionsabschnitt beansprucht und gezeigt, wobei eine ganzbestimmte Formgebung des Stanzniets im Vordergrund steht. In den Fig. 8 und 9 ist eine Ausführung des Nietabschnittes mit Kerben an der Außenseite gezeigt es werden aber keine Kerben an der Innenseite des Nietabschnitts vorgesehen

Schließlich wird in der US 2015/0226253 ein einstanzbares Element gezeigt, wobei der Stanzabschnitt durch Spalten in drei Segmente unterteilt ist. Auch hier können die Spalten zwischen den Segmenten nicht mit Kerben mit einer geründeten Form verglichen werden.

Das erfindungsgemäße Funktionselement bzw. das neue Befestigungsverfahren ist als bzw. für Bolzen gedacht, wie z.B. ein Massebolzen. Das hier beschriebene Verfahren befasst sich mit der Anbringung eines weitergebildeten Halbhohlstanznietes mit einer besonderen Funktion und mit zusätzlichen Verdrehsicherungsmerkmalen. Das Verfahren ist hauptsächlich für Blechstärken oberhalb von 2,5 mm anwendbar. Das Blech, auf dem die Bolzen festgemacht werden, wird nicht gelocht, so dass Dichtigkeit grundsätzlich gegeben ist. Die Geometrie des Bolzens kann so gestaltet werden, dass Drehmoment, Ausdrückkräfte und Ausknöpfkräfte sowie der Verdrehsicherheitswert relativ hoch sind. Da dieses Eigenschaftsprofil relativ gut zu den Anforderungen an einen Massebolzen passt, wird in der Figurenbeschreibung für einen Teil der Ausführungszeichnungen von einem Massebolzen ausgegangen.

Das erfindungsgemäße Funktionselement bzw. Zusammenbauteil kann aber beispielsweise für die folgenden Arten von Funktionen ausgelegt werden. Es kann für die Anbringung einer Anschlussklemme oder einer Mutter zur Befestigung einer Anschlussklemme verwendet werden. In diesem Falle wird der Schaftteil mit einem männlichen Gewinde oder einer Gewinde ähnlichen Ausbildung versehen. Die Kräfte, die aufzubringen sind, sind die Drehmomente, die zum Anziehen bzw. zum Lösen der Mutter vom am Blechteil angebrachten Funktionselement zum Klemmen der Anschlussklemme erforderlich sind, und etwaige üblicherweise kleinere Kräfte, die von den mit der Anschlussklemme verbundenen Kabeln ausgehen. Die fluiddichte und insbesondere wasserdichte Verbindung mit dem Blechteil ist deshalb von Bedeutung, da sie Korrosion im Bereich der elektrischen Anbindung vorbeugt.

Ferner kommt die Anbringung einer Bremsleitung oder eines Clips zur Befestigung einer Bremsleitung in Frage. Der jeweilige Clip kann beispielsweise eine oder mehrere Bremsleitungen umfassen und mittels einer Mutter auf dem Schaftteil des Funktionselements befestigt werden, der auch hier ein Gewinde oder eine Gewinde ähnliche Form aufweisen kann. Stattdessen kann der Clip einfach auf einen Schaftteil des Funktionselements mit Verrastungsmerkmalenwie eine oder mehrere Hinterschneidungen oder eine Tannenbaumform aufgeclipst werden. In beiden Fällen, d.h. Schaftteil mit Gewinde oder mit Verrastungsmerkmalen, sind die Kräfte, die von der Bremsleitung ausgehen, eher gering, wie auch die Kräfte, die zur Anbringung des Clips auf dem Schaftteil und zum Entfernen des Clips vom Schaftteil des am Blechteil angebrachten Funktionselements. Auch hier ist Korrosion unerwünscht, der auch hier durch die wasserdichte Anbringung des Funktionselements am Blechteil vorgebeugt wird.

Ferner kommt die Anbringung einer Teppichöse auf dem Schaftteil des am Blechteil angebrachten Funktionselements in Frage. Auch hier kommen nur mäßige Kräfte bei der Installation oder der Entfernung von Teppichen zur Anwendung. Auch hier ist Wasserdichtigkeit gefordert, um feuchte und modrige Teppiche zu vermeiden. Andere Beispiele umfassen die Anbringung von Halterungen und die Anbringung eines Gehäuses eines fahrzeugfesten Bauteils wie ein elektrisches Modul oder eines Sicherungskastens.

Bei einer besonders günstigen Form des Funktionselements besteht der genannte hohle Abschnitt aus einem zylindrischen Teil benachbart zum freien Endes des Abschnitts und einem sich in Richtung auf den zylindrischen Teil verjüngenden Teil, der sich zwischen dem Flansch und dem zylindrischen Teil befindet. Der sich verjüngende Teil bringt den Vorteil, dass die Abstützung und die Spreizung des zylindrischen Teils bei der Aufweitung begünstigt wird, wodurch unerwünschte Verformungen des Funktionselements bzw. Verwerfungen des Blechteils vermieden werden können. Ferner erleichtert der sich verjüngende Teil die Herstellung des Funktionselements.

Die genannten Kerben auf dem sich verjüngenden Teil weisen in Richtung auf den Flansch zugehend eine sich reduzierende radiale Tiefe auf, Die Innenseite des zylindrischen Teils des Abschnitts liegt bis auf den Bereich am freien Ende, der eine divergierende Kegelstumpfform aufweist, auf einer kreiszylindrischen Fläche. Diese Form ist nicht nur preisgünstig herzustellen, sondern begünstigt auch die technischen Werte der Anbindung des Funktionselements an das Blechteil.

Der Abschnitt am freien Ende an dem Übergang von der äußeren Seite des zylindrischen Teils zu dem eine divergierende Kegelstumpfform aufweisenden Bereich ist scharfkantig oder mit einer kleinen Rundung versehen und weist eine radiale Tiefe zur Begrenzung der divergierenden Kegelstumpfform am freien Ende des Zylinderabschnitts auf, die weniger als 30 % der maximalen Wandstärke des Zylinderabschnitts beträgt.

Der Flansch weist auf der Seite des genannten Abschnitts zwischen den Kerben Nasen auf, die Blechmaterial zum Erreichen einer zusätzlichen Verdrehsicherung wellenförmig verformen. Diese Auslegung macht es möglich - ohne die Herstellungskosten in die Höhe zu treiben - die Verdrehsicherungswerte deutlich zu erhöhen.

Das oben beschriebene erfindungsgemäße Zusammenbauteil ist so ausgelegt, dass der Flansch eine den Schaftteil umgebende Ringfläche aufweist, die in einem Abstand vor der dem Schaftteil zugewandten Seite des Blechteils steht. Dieses Zusammenbauteil ist besonders für die Anwendung als Massebolzen geeignet, da die Ringfläche durch eine aufgeschraubte Mutter metallisch blank gehalten werden kann, während das Eindringen des hohlen Abschnitts des Funktionselements in das Blechteil sicherstellt, dass dort ein niedriger Übergangswiderstand erreicht wird und über einen langen Zeitraum beibehalten werden kann, zumal Korrosion von Flüssigkeiten auf der Unterseite des Blechteils, d.h. auf der dem Funktionselement abgewandten Seite des Blechteils, nicht zu erwarten ist. Die besonders dichte Anbringung des Funktionselements in das Blechteil, d.h. von der Oberseite des Blechteils kommend, verhindert auch dort Korrosion zwischen dem hohlen Abschnitt und dem Blechteil.

Bei dem Zusammenbauteil weist die Verdickung in der Mitte auf der dem Funktionselement abgewandten Seite und radial innerhalb des aufgeweiteten Abschnitts eine Eindellung auf. Die Kräfte, die von einer Matrize mit einer mittleren Erhöhung innerhalb der ringförmigen Vertiefung der Matrize ausgehen, führen zu einer guten Spreizung des genannten Abschnitts und somit auch zu exzellenten mechanischen und elektrischen Eigenschaften des Zusammenbauteils

Bei dem erfindungsgenmäßen Zusammenbauteil befindet sich das Blechmaterial in innigem Eingriff mit den genannten Vertiefungen im Flansch.

Die Einstanzkräfte zur Anbringung des Funktionselements an ein Blechteil werden vorzugsweise über eine Mutter, die am Schaftteil des Funktionselements aufgeschraubt ist und an einer Ringfläche des Flansches anliegt, auf das Funktionselement aufgebracht. Die Mutter kann somit die metallisch blanke Ringfläche des Funktionselements während und nach dem Einstanzvorgang schützen und abdichten. Auf diese Weise kann das Blechteil mit dem Funktionselement und der Mutter lackiert werden, ohne die metallisch blanke Ringfläche durch den Lackauftrag zu beeinträchtigen. Die Mutter muss nur anschließend um einige Umdrehungen gelockert werden, um eine gabelförmige Kabelöse zwischen der Mutter und der metallisch blanken Ringfläche einzuführen, wonach die Mutter wieder angezogen wird. Hierdurch wird eine elektrisch hochwertige Verbindung zwischen dem Kabel und dem Blechteil erreicht.

Die Erfindung wird nachfolgend anhand eines Ausführungsbeispiels und unter Bezugnahme auf die Zeichnungen näher erläutert, in denen zeigen:
- Fig. 1A -1E: eine Darstellung eines nicht erfindungsgemäßen Funk-tionselements mit parallel zur Längsrichtung erstre-ckenden Kerben am Zylinderanschnitt, und zwar in zwei perspektivischen Ansichten (Fig. 1A und 1B), in einer Stirnansicht (Fig. 1C) in Pfeilrichtung C der Fig. 1B, in einer Seitenansicht (Fig. 1D) und in einer teilweise in Längsrichtung geschnittenen Ansicht (Fig. 1E),
- Fig. 2A - 2E: Darstellungen entsprechend den Darstellungen gemäß den Fig. 1A - 1E, jedoch mit einer auf den Schaftteil des Funktionselements aufgeschraubten Mutter,
- Fig. 3A - 3E: fünf Zeichnungen zur Darstellung der Anbringung des Funktionselements der Fig. 1A bis 1E an ein Blechteil, wobei die Fig. 3B das fertiggestellte Zusammenbauteil in einem Halbschnitt zeigt, die Fig. 3C entspricht der Fig. 3B, jedoch ohne Bezugszeichen aber mit Schnittebenen D-D und E-E, die Fig. 3D einen Schnitt entsprechend der Schnittebene D-D zeigt und die Fig. 3E einen Schnitt entsprechend der Schnittebene E-E darstellt,
- Fig. 4A - 4E: Darstellungen entsprechend den Fig. 1A bis 1E jedoch von einem erfindungsgemäßen Funktionselement mit parallel zur Längsrichtung erstreckenden Kerben auf der inneren Mantelfläche des zylindrischen Abschnitts,
- Fig. 5A - 5E: Darstellungen ähnlich den Fig. 2A bis 2E jedoch für das erfindungsgemäße Funktionselement entsprechend den Fig. 4A bis 4E,
- Fig. 6A bis 6E: Darstellungen ähnlich den Fig. 3A bis 3E jedoch für das erfindungsgemäße Funktionselement entsprechend den Fig. 4A bis 4E,
- Fig. 7A - 7E: Darstellungen entsprechend den Fig. 1A bis 1E jedoch von einem erfindungsgemäßen Funktionselement mit parallel zur Längsrichtung erstreckenden Kerben sowohl auf der äußeren Mantelfläche des zylindrischen Abschnitts als auch auf dessen inneren Mantelfläche,
- Fig. 8A - 8E: Darstellungen ähnlich den Fig. 2A bis 2E jedoch für das erfindungsgemäße Funktionselement entsprechend den Fig. 7A bis 7E,
- Fig. 9A bis 9E: Darstellungen ähnlich den Fig. 3A bis 3E jedoch für das erfindungsgemäße Funktionselement entsprechend den Fig. 7A bis 7E.

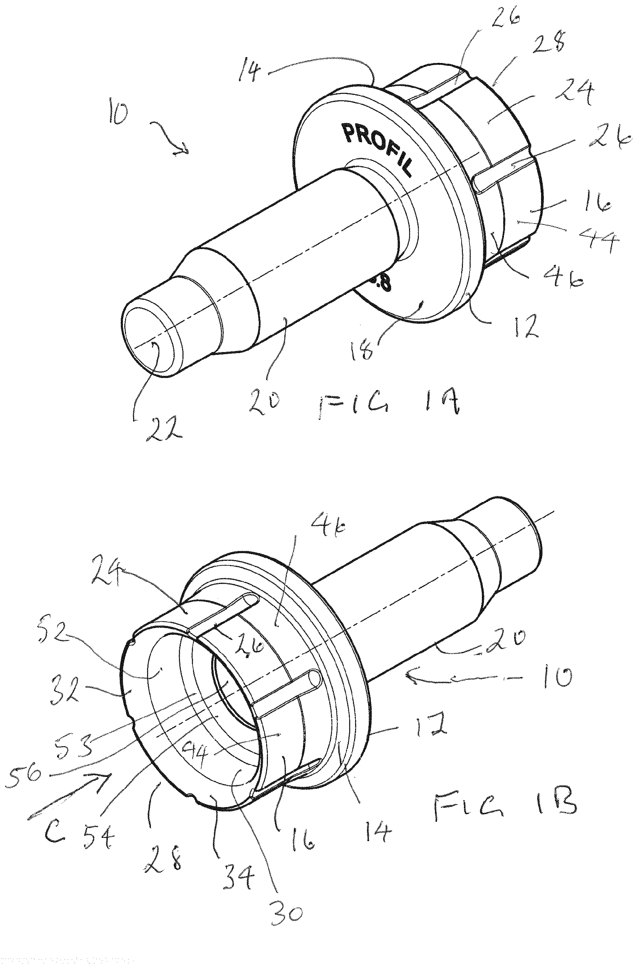

Bezugnehmend auf die Fig. 1A bis 1E wird ein Funktionselement 10 mit einem einen Flansch 12 und einem von einer Seite 14 des Flansches 12 wegragenden und zum durchbrechungsfreien Einstanzen in ein Blechteil ausgelegten Abschnitt 16 sowie einem von einer der ersten Seite 14 entgegengesetzten Seite 18 des Flansches 12 wegragenden und eine Funktion erfüllenden Schaftteil 20. Der Schaftteil 20 bzw. das Funktionselement 10 weist eine Längsachse 22 auf, wobei der Flansch 12 und der Abschnitt 16 zumindest im Wesentlichen koaxial zum Schaftteil 20 angeordnet sind. Der Abschnitt 16 ist als hohler Zylinder ausgebildet, der auf seiner äußeren Mantelfläche 24 sich parallel zur Längsrichtung bzw. Längsachse erstreckende Kerben 26 aufweist. In dieser Ausführung sind sechs solche Kerben 26 gleichmäßig um die Längsachse herum angeordnet.

Die Zahl der Kerben ist nicht auf sechs begrenzt es können mehr oder weniger Kerben bzw. Nuten vorgesehen werden. Weniger als drei ist wahrscheinlich nicht sehr günstig da es dann schwierig wäre den erwünschten hohen Verdrehwiderstand zu erreichen. Mehr als zwölf Kerben ist wahrscheinlich auch ungünstig, da die Herstellung schwieriger wäre und die erwünschten zylindrischen Flächen zwischen den einzelnen Kerben dazu neigen, klein zu werden.

Die Kerben 26 haben eine im Querschnitt gerundete Form, die insbesondere einem halbkreisförmigen Querschnitt entspricht.

Im Bereich seines freien Stirnendes 28 weist der hohle Abschnitt 16 auf der Innenseite 30 in einem unmittelbar zum freien Ende 28 des hohlen Abschnitts benachbarten Bereich 32 eine zumindest im Wesentlichen am freien Ende auslaufende, divergierende Kegelstumpfform 34 auf. Beim Einstanzen in das Blechteil dient diese Kegelstumpfform 34 der Aufweitung des hohlen Abschnitts 16.

An dieser Stelle soll betont werden, dass der Bereich 32 nicht zwangsläufig eine strenge Kegelstumpfform aufweisen muss, sondern auch eine gewölbte Fläche, eine trompetenmundartige Form oder eine andere Formgebung aufweisen kann. Wichtig ist lediglich, dass der Bereich 32 eine zunehmend divergierende Form aufweist in einer Richtung vom Flansch 12 auf das freie Stirnende 28 gehend betrachtet.

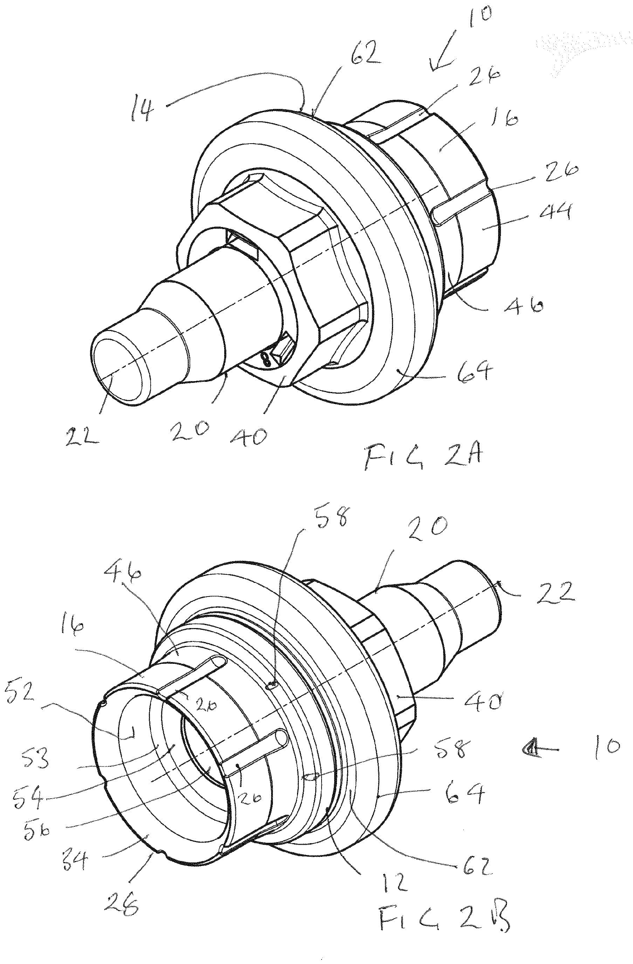

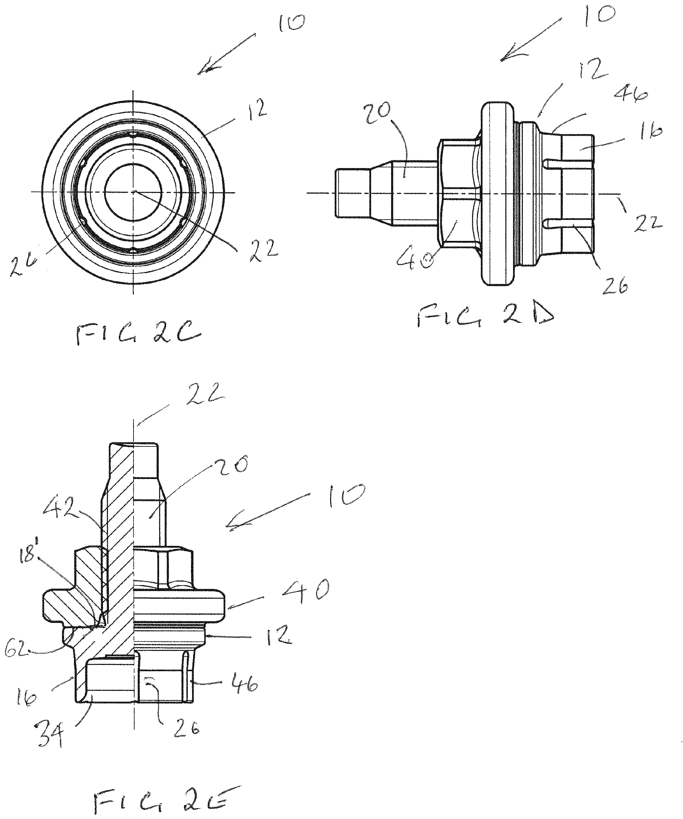

In diesem Beispiel ist das Funktionselement 10 zur Anbringung einer Mutter 40 (Fig. 2A -2E) zur Befestigung einer Anschlussklemme (nicht gezeigt) ausgelegt und weist zu diesem Zweck einen Gewindezylinder 42 auf. Diese Auslegung ist aber nicht zwingend erforderlich. Stattdessen kann der Schaftteil 20 beispielsweise zur Durchführung einer der folgenden Funktionen ausgelegt werden:
Die Anbringung einer Bremsleitung oder eines Clips zur Befestigung einer Bremsleitung,
die Anbringung einer Teppichöse,
die Anbringung einer Halterung,
die Anbringung eines Gehäuses eines fahrzeugfesten Bauteils, bei dem keine besonderen Anforderungen an die Festigkeit der Verbindung gestellt werden, d.h. nicht für die Anbringung von sicherheitsrelevanten Bauteilen.

Wie aus den Figuren ersichtlich ist, besteht der genannte hohle Abschnitt 16 aus einem zylindrischen Teil 44 benachbart zum freien Ende 28 des Abschnitts und einem sich in Richtung auf den zylindrischen Teil 44 verjüngenden Teil 46, das zwischen dem Flansch 12 und dem zylindrischen Teil 44 angeordnet ist, wobei die genannten Kerben 26 auf dem sich verjüngenden Teil in Richtung auf den Flansch zugehend eine sich reduzierende radiale Tiefe aufweisen. Die Innenseite 50 des sich verjüngenden Teils 46 und des zylindrischen Teils 44 des hohlen Abschnitts 16 bis auf den Bereich 32 am freien Ende 28, der eine divergierende Kegelstumpfform 34 aufweist, liegt auf einer kreiszylindrischen Fläche 52. Die Innenseite 50 geht benachbart zur Seite 14 des Flansches 12 über eine Rundung 53 in einen Bodenbereich 54 über, der vorzugsweise eine mittige Eindellung 56 aufweist. Diese in Draufsicht kreisförmige Eindellung 56 ist fertigungstechnisch günstig und kann beim Einstanzen im Blechteil als Pufferraum dienen.

Der hohle Abschnitt 16 ist am freien Ende 28 an dem Übergang von der äußeren Seite des zylindrischen Teils 44 zu dem eine divergierende Kegelstumpfform 34 aufweisenden Bereich 32 scharfkantig oder mit einer kleinen Rundung versehen und weist eine radiale Dicke "d" zur Begrenzung der divergierenden Kegelstumpfform 34 am freien Ende des Zylinderabschnitts 44 auf, die üblicherweise aber nicht zwangsläufig weniger als 30 % der maximalen Wandstärke "w" des Zylinderabschnitts 44 beträgt (d.h. ohne die radiale Tiefe der Kerben 26 berechnet).

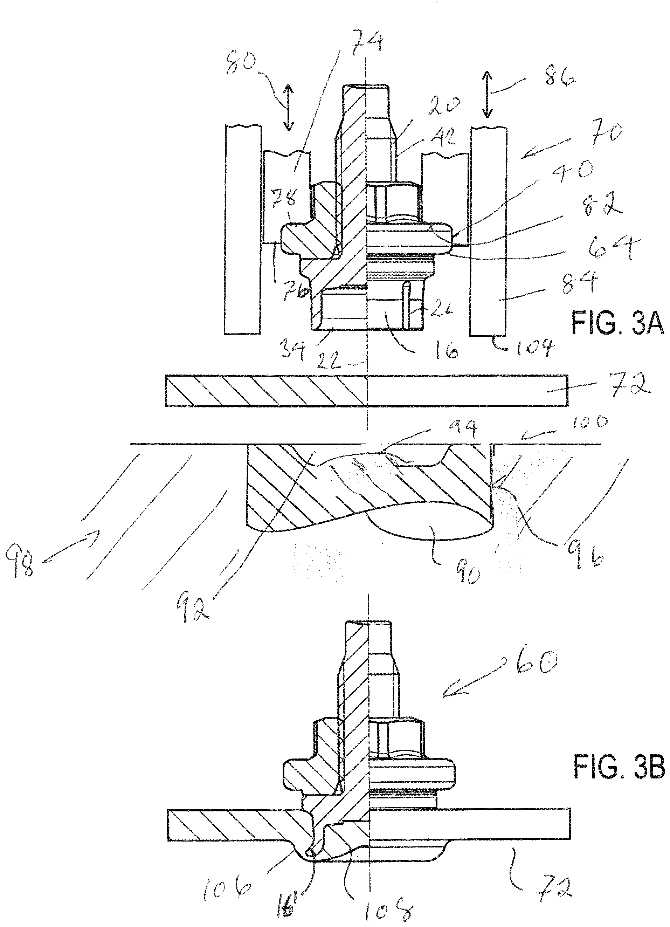

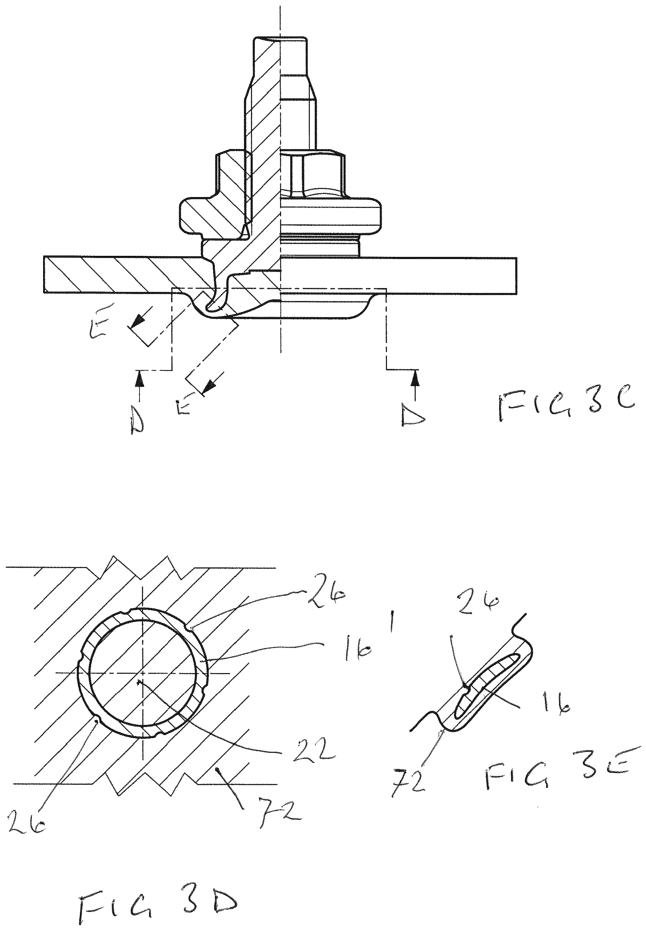

Ferner kann der Flansch 22 auf der Seite 14 des genannten hohlen Abschnitts 12 zwischen den Kerben 26 Nasen 58 aufweisen (Fig. 2B), die im fertigen Zusammenbauteil 60 gemäß Fig. 3B das Blechmaterial zum Erreichen einer zusätzlichen Verdrehsicherung wellenförmig verformen kann.

In den Beispielen, die in den Zeichnungen gezeigt sind, wird - wie bereits zum Ausdruck gebracht - der Schaftteil 20 mit einem Gewinde 42 zum Anschrauben einer Mutter 40 ausgelegt. Die dem Flansch 12 zugewandte Seite 62 der Mutter 40, die als Flanschmutter mit Flansch 64 ausgebildet ist, steht im Prinzip senkrecht zur mittleren Längsachse 22 des Funktionselements und dichtet gegen die metallisch blanke, ringförmige Anlagefläche des Flansches 12 ab, die den Schaftteil umgibt, ab. Es kann allerdings günstig sein, die dem Flansch 12 bzw. der Ringfläche 18' des Flansches (die an der Seite 18 des Flansches ausgebildet ist) zugewandte Anlagefläche 62 der Flanschmutter (siehe Fig. 2E) als flache Konusfläche, d.h. mit einem eingeschlossenen Konuswinkel von knapp unter 180° auszubilden, damit ein enger Dichtring radial außen an der Ringfläche 18' entsteht. Stattdessen könnte die Ringfläche 18' mit einem solchen Konuswinkel versehen werden.

Das bevorzugte Verfahren zur Herstellung eines Zusammenbauteils 60 durch Einstanzen des Funktionselements 10 wird nunmehr beschrieben, und zwar anhand der Fig. 3A und 3B. Die Fig. 3A zeigt das Funktionselement 10 mit aufgeschraubter Flanschmutter 40 gemäß den Fig. 2A bis 2E in einem Setzkopf bzw. in einem Stanzkopf 70 oberhalb eines nicht gelochten Blechteils 72 positioniert. Solche Setzköpfe bzw. Stanzköpfe 70 sind auf dem Gebiet der Funktionselemente bestens bekannt. Sie weisen im Allgemeinen einen hohlen Stempel 74 auf, der an seinem unteren Ende 76 mit einer Aufnahme 78 zum Aufnehmen eines Funktionselements ausgebildet ist. Der Stempel 74 ist entsprechend dem Doppelpfeil 80 im Stanzkopf 70 beweglich angeordnet und kann in eine obere Position gefahren werden, in der ein Funktionselement 10, hier mit aufgeschraubter Mutter 40 durch einen Führungskanal (nicht gezeigt) unterhalb des Stempels 72 gebracht werden kann. Der Stempel 72 wird anschließend nach unten bewegt, bis der Sechskantbereich der Mutter 40 oberhalb des Flansches 64 sich innerhalb des hohlen Stempels befindet und die der Oberseite 82 des Flansches 64 zugewandte Fläche der Aufnahme 78 des Stempels 72 gegen diese Oberseite 82 des Flansches 64 der Flanschmutter 40 anliegt. Um den Stempel 74 herum befindet sich ein zylindrischer Niederhalter 84, der entsprechend dem Doppelpfeil 86 beweglich gelagert ist und ebenfalls nur schematisch gezeigt wird.

Unterhalb des Blechteils 72 befindet sich eine Matrize 90 mit einer mittleren Vertiefung 92 und in der Mitte dieser Vertiefung 92 mit einer mittleren oben gerundeten Erhöhung 94. Sowohl die Vertiefung 92 als auch die Erhöhung 94 sind in Draufsicht kreisförmig, d.h. rotationssymmetrisch zu der mittleren Längsachse 22 des Funktionselements angeordnet. Die Matrize befindet sich in einer entsprechenden Öffnung 96 eines unteren Werkzeugs 98, wobei die ringförmige Blechanlagefläche 100 der Matrize flächenbündig mit der Oberseite 102 des unteren Werkzeugs 98 liegt.

In vielen Fällen wird der Setzkopf 70 an einem oberen Werkzeug einer Presse (nicht gezeigt) oder an einer Zwischenplatte einer Presse angebracht, während das untere Werkzeug 98 das untere Werkzeug der Presse darstellt. Für jeden Hub der Presse wird jeweils ein Funktionselement 10, in diesem Beispiel mit aufgeschraubter Mutter 40 mittels des Stanzkopfes 70 und der Matrize 90, in das Blechteil eingestanzt. Sollte die Mutter 40 nicht zum Einstanzen des Funktionselements verwendet werden, kann der Stempel 74 direkt gegen die Ringfläche 18' des Funktionselements drücken.

Beim Schließen der Presse wird der federvorgespannte Niederhalter 84 gegen das Blechteil gedrückt, bis seine untere Stirnseite 104 das Blechteil 72 zwischen sich und der Ringfläche 100 der Matrize klemmt. Beim weiteren Schließen der Presse drückt der Stempel 74 das Funktionselement 10 mit der Mutter nach unten, bis das freie Ende des hohlen Abschnitts 16 die Oberseite des Blechteils 72 berührt und anfängt, das Blechmaterial unterhalb des hohlen Abschnitts 16 zu verdrängen. Bei fortschreitender nach unten gerichteter Bewegung des Stanzkopfes 70 wird Blechmaterial in die Aufnahme 92 der Matrize 90 gedrückt und bildet die Verdickung des Blechteils, die mit 106 in Fig. 3B gekennzeichnet ist. Während dieser Bewegung führt die Berührung der Kegelstumpfform 34 des hohlen Abschnitts sowie der Druck der von der Erhöhung 94 ausgeht zu einer nach unten divergierenden Form 16' des hohlen Abschnitts 16 des Funktionselements 10. Dabei wird Blechmaterial in den Hohlraum des hohlen Abschnitts eingebracht und drückt gegen die Innenseite 50 des hohlen Abschnitts 16', wodurch der hohle Abschnitt 16' von innen versteift wird. Es ist aus Fig. 3B ersichtlich, dass das Stirnende 28 des hohlen Abschnitts 16' nicht durch die Unterseite des Blechteils 72 ragt, d.h. diese nicht durchdringt, wodurch eine fluiddichte Anbringung des Funktionselements 10 am Blechteil erfolgt ist. Dabei dringen das Blechmaterial in die Längskerben hinein und erzeugen so eine Verdrehsicherung. Sollten Nasen wie 58 vorgesehen sein, so wird Blechmaterial im Flanschbereich wellenförmig verformt, t und erhöht den Verdrehsicherungswert entsprechend. Dadurch, dass der hohle Abschnitt16' eine aufgespreizte Form ausweist, ist das Funktionselement gegen Ausziehkräfte gesichert, die versuchen, das Funktionselement aus dem Blechteil 72 herauszuziehen. Da der Flansch 12 vollflächig an dem Blechteil 72 anliegt und vorzugsweise teilweise in dieses eingedrungen ist, wird auch ein guter Ausknöpfwiderstand erreicht. Die Verdickung 106 schafft auch Platz für die Unterbringung des hohlen Abschnitts 16'.

Die Verdickung 106 weist in der Mitte auf der dem Funktionselement 10 abgewandten Seite und radial innerhalb des aufgeweiteten Abschnitts 16' eine Eindellung 108 auf, die eine Form komplementär zu dem der Erhöhung 94 der Matrize 90 aufweist.

Obwohl hier das Verfahren im Sinne der Orientierung des Funktionselements 10 in den Fig. 3A und 3B beschrieben wurde, ist diese Orientierung keinesfalls zwingend erforderlich. Beispielsweise könnte der Stanzkopf 70 nach oben weisend im unteren Werkzeug der Presse oder ebenfalls nach oben weisend in der Zwischenplatte der Presse angeordnet werden, während die Matrize dann nach unten weisend in die Zwischenplatte der Presse bzw. im oberen Werkzeug der Presse angeordnet wird. Die Bezeichnungen "oben" und "unten" oder ähnliche Bezeichnungen sind entsprechend der geometrischen Anordnung der Fig. 3A und 3B zu verstehen und sollen nicht einschränkend ausgelegt werden. Im Übrigen sind auch Schräglagen des Stanzkopfes 70 und der Matrize 90 möglich.

Es ist auch nicht zwingend erforderlich, die Anbringung des Funktionselements in einer Presse vorzunehmen. Dies kann - ohne Einschränkung - auch mittels eines Roboters, der das Funktionselement gegen eine auf einer Matrize abgestützte Matrize, oder mittels einer Zange oder in einem C-Gestell erfolgen. Auch kommen an sich bekannte Anlagen für die automatische Anbringung von Halbhohlstanznieten für die Anbringung der erfindungsgemäßen Funktionselemente in Frage.

Das hier beschriebene Verfahren umfasst somit die nachfolgenden Schritte:
- Anordnen des Blechteils 72 auf einer eine mittlere Vertiefung 92 aufweisende Matrize 90, wobei die Größe der Öffnung der Vertiefung 92 den Durchmesser der Verdickung 106 und die Tiefe der Vertiefung 92 die Höhe der Verdickung 106 bestimmt, wobei die Matrize innerhalb der Vertiefung vorzugsweise eine mittlere Erhöhung 94 aufweist,
- Drücken des Funktionselements 10 mit dem freien Ende 28 des hohlen Abschnitts 16 voran gegen die der Matrize 90 abgewandten Seite des Blechteils 72 und Eindrücken des hohlen Abschnitts 16 in das Blechmaterial hinein, wodurch die divergierende Kegelstumpfform 34 des Abschnitts gegebenenfalls in Kombination mit einer mittleren Erhöhung 94 der Vertiefung 92 der Matrize 90 aufgeweitet wird und das Blechmaterial in Eingriff mit der Mantelfläche des genannten Abschnitts 16 sowie mit den dort vorgesehenen Kerben 26 und innerhalb des hohlen Abschnitts 16 gebracht wird,
- Verdrängen des Blechmaterials durch den genannten Abschnitt 16 unter den Einstanzkräften in die Vertiefung 92 der Matrize 90 hinein und Ausbildung der genannten Verdickung 106 und gegebenenfalls der genannten Eindellung 108, und
- gegebenenfalls teilweises Eindrücken der dem Abschnitt zugewandten Seite 14 des Flansches 12 zzgl. etwaig dort vorhandener Verdrehsicherungsmerkmale 58 in die der Matrize 90 abgewandten Seite des Blechteils 72.

Dabei werden die Einstanzkräfte vorzugsweise über eine Mutter 40, die am Schaftteil 20 des Funktionselements 10 aufgeschraubt ist und an einer Ringfläche 18' des Flansches 12 anliegt, auf das Funktionselement 10 aufgebracht.

Die Flanschmutter 40 kann, wie oben näher erläutert wurde, für das Einstanzen des Funktionselements verwendet werden.

Das Ergebnis des Verfahrens ist das Zusammenbauteil 60, das in Fig. 3B gezeigt ist, bestehend aus dem Blechteil 72 und dem daran angebrachten Funktionselement 10. Besonders wichtig ist, dass das Blechteil 72 im Bereich des angebrachten Funktionselements 10 im Vergleich zu der Blechteilstärke radial außerhalb des angebrachten Funktionselements eine Verdickung 106 aufweist. Der hohle Abschnitt 16 ist im Bereich der Verdickung 106 und am freien Ende aufgeweitet und formschlüssig im Blechteil 72 aufgenommen, ohne das Blechteil zu durchdringen. Blechmaterial befindet sich innerhalb des aufgeweiteten Abschnitts und außerhalb des Abschnitts in Eingriff mit dem Abschnitt 16' und mit den Längskerben 26.

Die Ringfläche 18' des Flansches 12, die den Schaftteil 20 umgibt, befindet sich in einem Abstand vor der dem Schaftteil zugewandten Seite des Blechteils 72.

Der zylindrische Abschnitt 16 wirkt einigermaßen wie ein Stanzniet und kann als Nietabschnitt verstanden werden zumal der Abschnitt bei der Anbringung am Blechteil verformt wird, was definitionsgemäß für einen Nietabschnitt zutrifft.

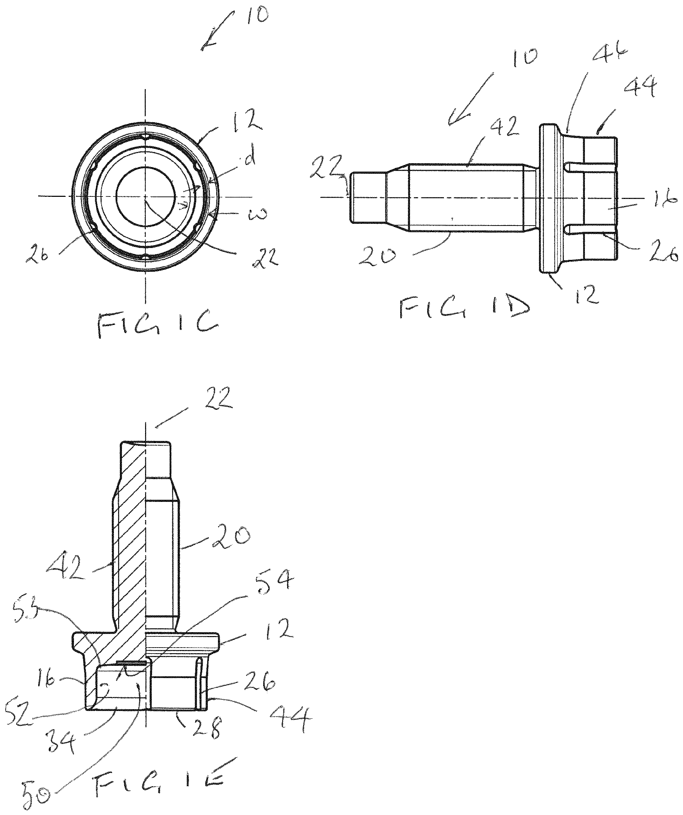

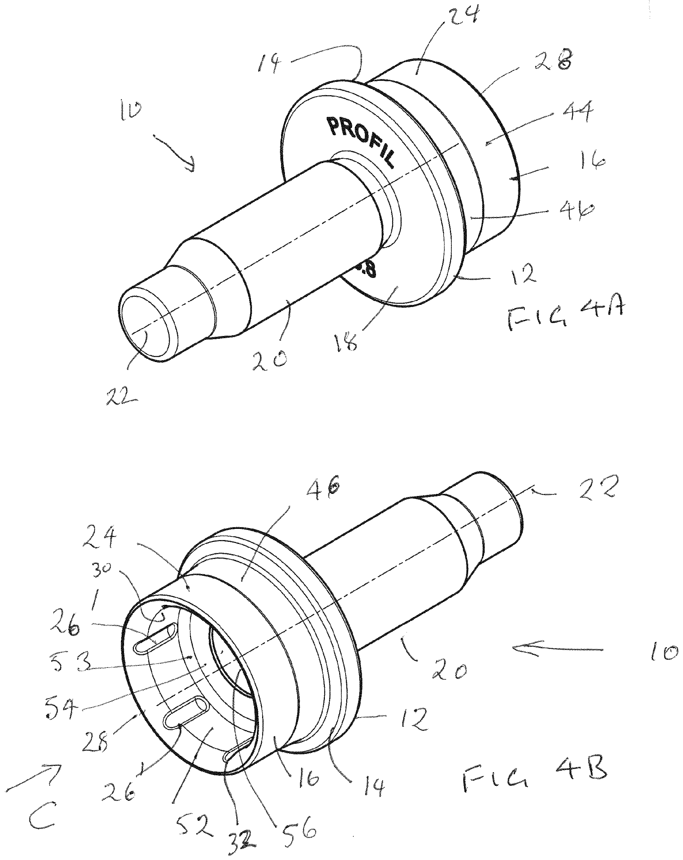

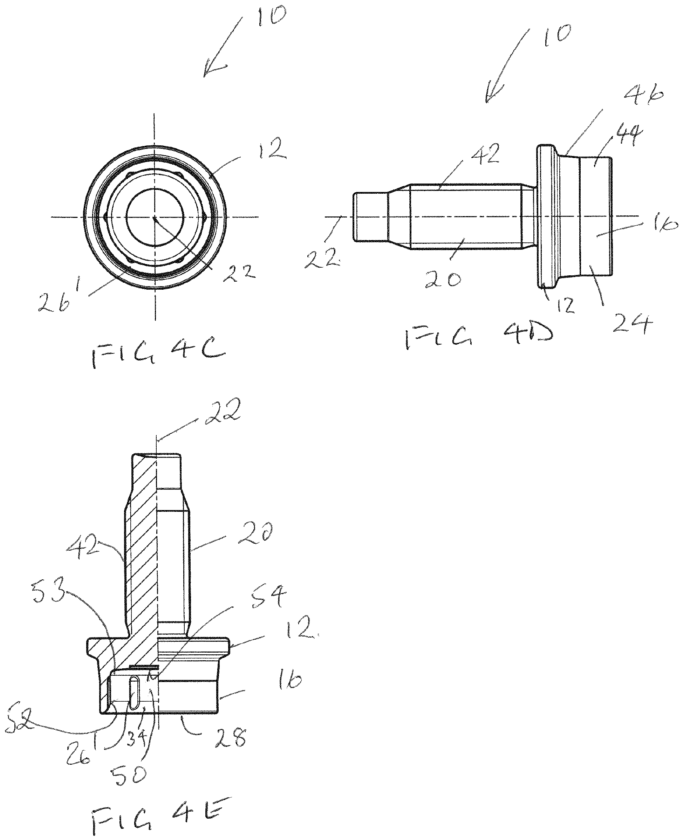

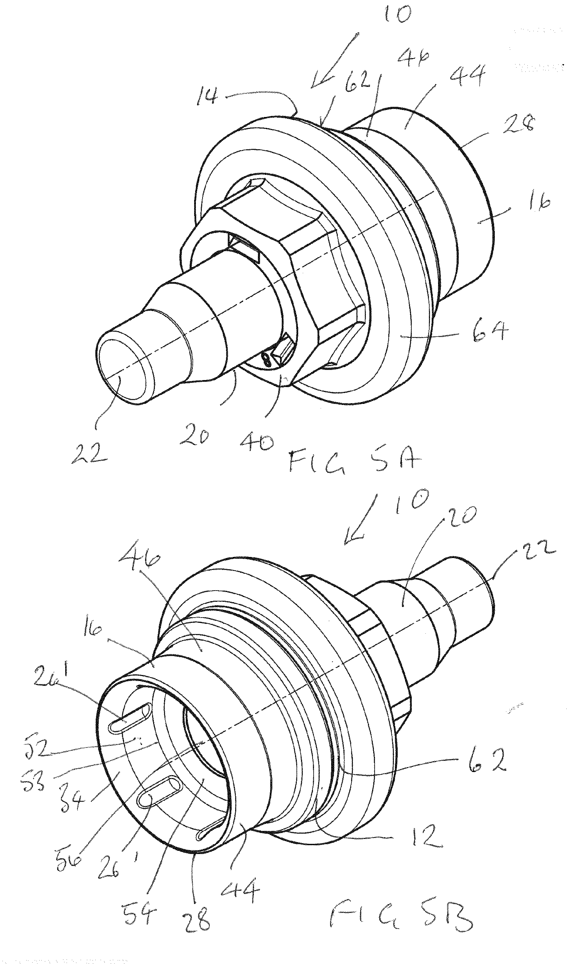

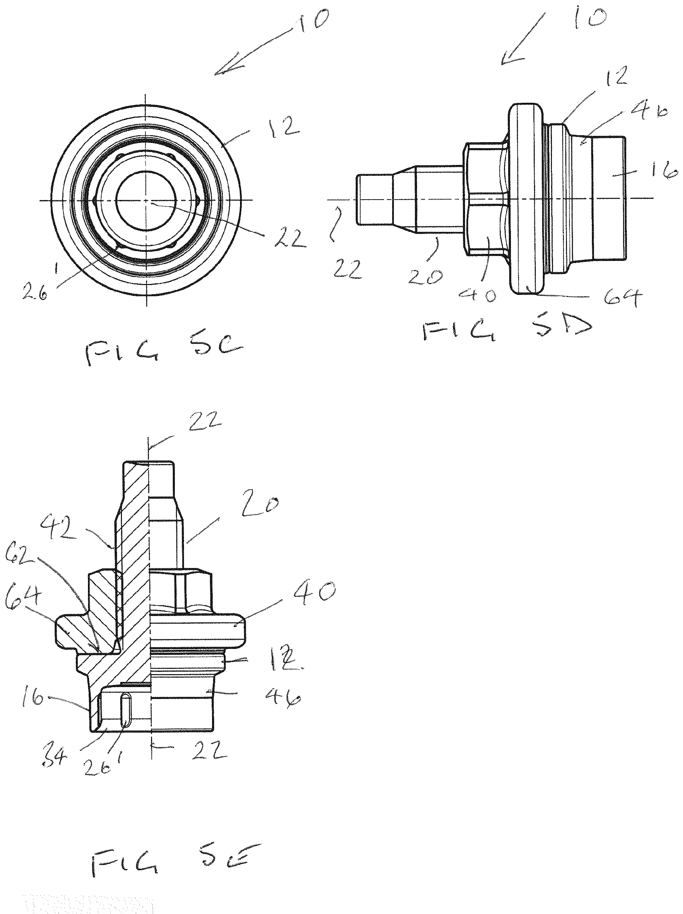

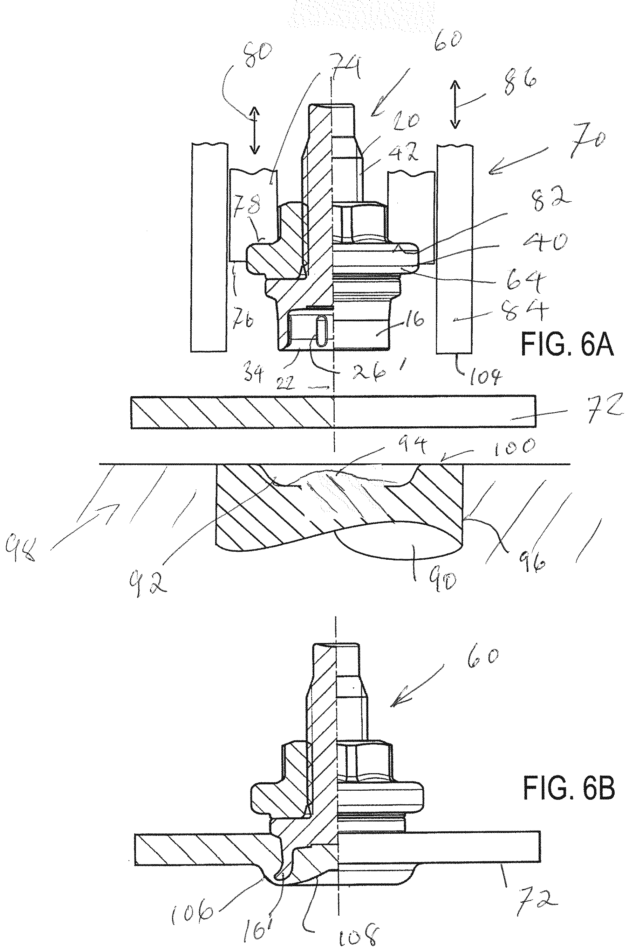

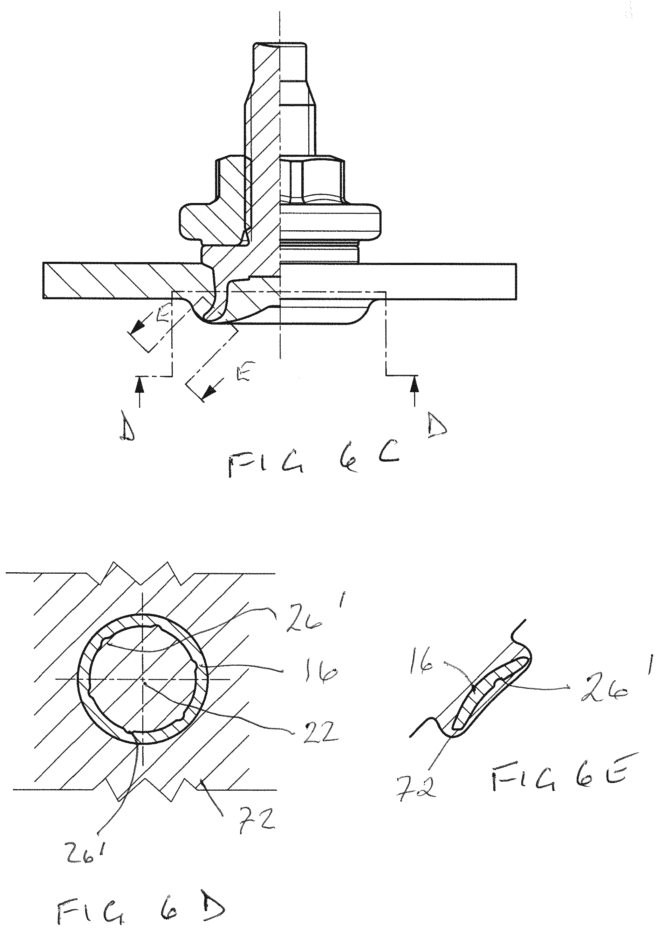

In den weiteren Ausführungsformen gemäß den Fig. 4 bis 9 werden die gleichen Bezugszeichen verwendet, wie in der soeben beschriebenen Ausführung gemäß den Fig. 1 bis 3. Die Bezugszeichen deuten auf Teile hin, die die gleiche Form oder Funktion haben wie in Zusammenhang mit den Fig. 1 bis 3 beschrieben, es sei denn etwas gegenteiliges gesagt wird. Die Beschreibung wird somit nicht unnötig wiederholt.

Es soll lediglich zum Ausdruck gebracht werden, das in der Ausführung gemäß den Fig. 4 bis 6 die sich parallel zur Längsrichtung erstreckenden Kerben 26' an der inneren Mantelfläche 52 des hohlen zylindrischen Abschnitts 16 anstelle an der äußeren Mantelfläche des zylindrischen Abschnitts vorgesehen sind.

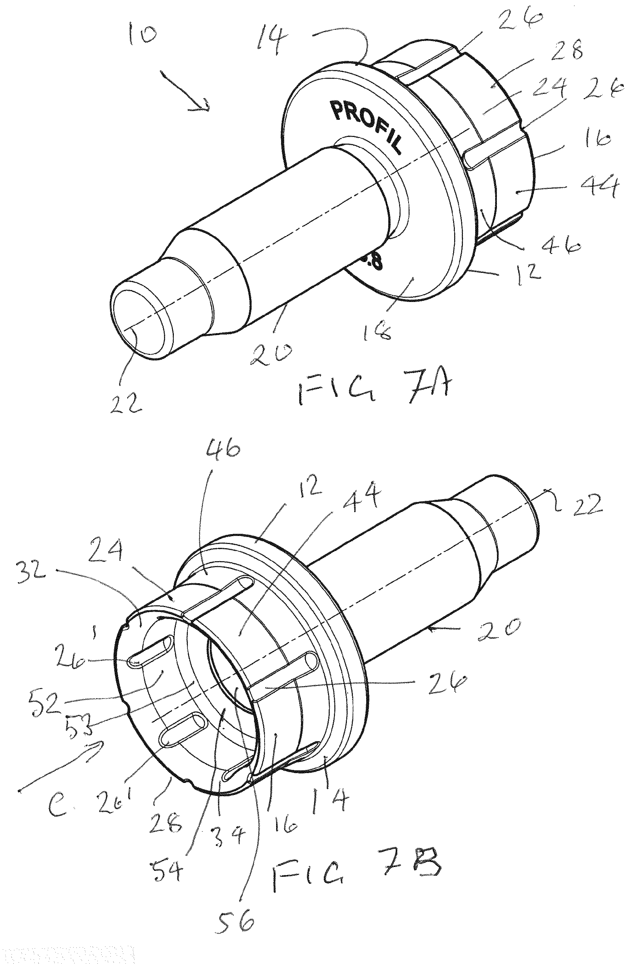

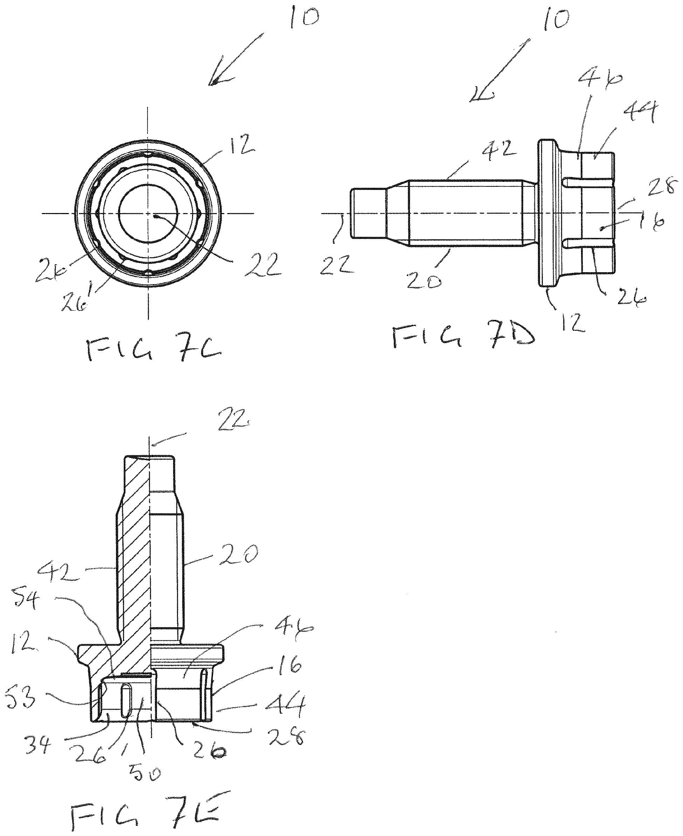

Bei der Ausführung gemäß den Fig. 7 bis 9 werden sich parallel zur Längsrichtung erstreckende Kerben 26, 26' sowohl auf der äußeren Mantelfläche des zylindrischen Abschnitts 16 als auch an der inneren Mantelfläche 52 des hohlen zylindrischen Abschnitts vorgesehen, wobei die Kerben 26' an der inneren Mantelfläche 52 des hohlen zylindrischen Abschnitts 16 winkelmäßig gegenüber den Kerben 26 an der äußeren Mantelfläche versetzt sind, um eine ausgeprägte Schwächung der Wandung des hohlen zylindrischen Abschnitts 16 zu vermeiden.

Wie oben erläutert, ist bei allen Ausführungen die Zahl der Kerben nicht auf sechs begrenzt, es können mehr oder weniger Kerben bzw. Nuten vorgesehen werden. Wenn Kerben auf der inneren Mantelfläche und auf der äußeren Mantelflache des zylindrischen Abschnitts 16 vorgesehen sind, soll deren Anzahl auf der inneren Mantelfläche vorzugsweise gleich deren Anzahl auf der äußeren Mantelfläche sein, um die versetzte Anordnung zu gewährleisten.

Das Funktionselement kann aus dem gleichen Material bestehen, das normalerweise für Halbhohlstanznieten verwendet wird oder aus Materialien die für die Herstellung mittels Kaltverformung von Schrauben der Güteklasse 4.6 oder 8.8 (oder höher) nach Din verwendet werden.

In allen Ausführungen erfolgt die Bewegung des Blechmaterials in die Kerben 26' oder 26, 26' hinein durch kalt Verformung, die entsteht wenn das Blechmaterial zwischen dem Setzstempel und der Matrize gequetscht wird.

### Bezugszeichenliste:

- 10: Funktionselement
- 12: Flansch
- 14: Seite
- 16: Abschnitt
- 16': divergente Form des hohlen Abschnitts 16
- 18: Seite
- 18': Ringfläche
- 20: Schaftteil
- 22: Längsachse
- 24: Mantelfläche
- 26: Kerben
- 28: Ende
- 30: Innenseite
- 32: Bereich
- 34: Kegelstumpfform
- 40: Mutter
- 42: Gewindezylinder
- 44: zylindrischer Teil
- 46: verjüngendes Teil
- 50: Innenseite
- 52: kreiszylindrische Fläche
- 53: Rundung
- 54: Bodenbereich
- 56: Eindellung
- 58: Nasen
- 60: Zusammenbauteil
- 62: Seite
- 64: Flansch
- 70: Stanzkopf
- 72: Blechteil
- 74: Stempel
- 76: Ende
- 78: Aufnahme
- 80: Doppelpfeil
- 82: Oberseite
- 84: Niederhalter
- 86: Doppelpfeil
- 90: Matrize
- 92: Vertiefung
- 94: Erhöhung
- 96: Öffnung
- 98: Werkzeug
- 100: Blechanlagefläche
- 102: Oberseite
- 104: Stirnseite
- 106: Verdickung
- 108: Eindellung

## Patentansprüche

1. Funktionselement (10) mit einem einen Flansch (12) aufweisenden und einem von einer Seite (14) des Flansches (12) wegragenden und zum durchbrechungsfreien Einstanzen in ein Blechteil (72) ausgelegten Abschnitt (16) sowie einem von einer der ersten Seite (14) entgegengesetzten Seite (18) des Flansches (12) wegragenden und eine Funktion erfüllenden Schaftteil (20) mit einer Längsachse (22), wobei der Flansch (12) und der Abschnitt (16) zumindest im Wesentlichen koaxial zum Schaftteil (20) angeordnet sind, wobei der Abschnitt (16) als hohler Zylinder ausgebildet ist, der auf seiner inneren Mantelfläche sich parallel zur Längsrichtung erstreckenden Kerben ( 26') aufweist, und der Abschnitt (16) im Bereich (32) seines freien Stirnendes (28) auf der Innenseite vorzugsweise in einem unmittelbar zum freien Ende (28) des Abschnitts benachbarten Bereich (32) eine zumindest im Wesentlichen am freien Ende (28) auslaufende, divergierende Kegelstumpfform (34) aufweist, die beim Einstanzen im Blechteil der Aufweitung des Abschnitts (16) dient wobei die Kerben (26') eine im Querschnitt gerundete Form aufweisen, die insbesondere einem halbkreisförmigen Querschnitt entspricht.

2. Funktionselement nach Anspruch 1, wobei sich parallel zur Längsrichtung erstreckenden Kerben (26) auch auf der äußeren Mantelfläche des Zylinders vorgesehen sind, die eine im Querschnitt gerundete Form aufweisen, die insbesondere einem halbkreisförmigen Querschnitt entspricht.

3. Funktionselement nach Anspruch 1 oder 2, wobei der Schaftteil (20) zur Durchführung einer der folgenden Funktionen ausgelegt ist:
die Anbringung einer Anschlussklemme oder einer Mutter zur Befestigung einer Anschlussklemme,
die Anbringung einer Bremsleitung oder eines Klips zur Befestigung einer Bremsleitung,
die Anbringung einer Teppichöse,
die Anbringung einer Halterung,
die Anbringung eines Gehäuses eines fahrzeugfesten Bauteils, bei dem keine besonderen Anforderungen an die Festigkeit der Verbindung gestellt werden, d.h. nicht für die Anbringung von sicherheitsrelevanten Bauteilen.

4. Funktionselement nach einem der vorhergehenden Ansprüche, wobei der genannte hohle Abschnitt (16) aus einem zylindrischen Teil (44) benachbart zum freien Ende (28) des Abschnitts (16) und einem sich in Richtung auf den zylindrischen Teil (44) verjüngenden Teil (46) zwischen dem Flansch (12) und dem zylindrischen Teil (44) besteht.

5. Funktionselement nach einem der vorhergehenden Ansprüche, wobei der Abschnitt (16) am freien Ende an dem Übergang von der äußeren Seite des zylindrischen Teils (44) zu dem eine divergierende Kegelstumpfform (34) aufweisenden Bereich scharfkantig oder mit einer kleinen Rundung versehen ist und eine radiale Tiefe (d) zur Begrenzung der divergierenden Kegelstumpfform (34) am freien Ende des Zylinderabschnitts aufweist, die weniger als 30 % der maximalen Wandstärke (w) des Zylinderabschnitts (44) beträgt.

6. Funktionselement nach einem der vorhergehenden Ansprüche, wobei der Flansch (12) auf der Seite (14) des genannten Abschnitts (16) zwischen den Kerben (26) Nasen (58) aufweist, wobei sich das Blechmaterial zum Erreichen einer zusätzlichen Verdrehsicherung mit den Nasen (58) im Eingriff befindet.

7. Funktionselement nach einem der vorhergehenden Ansprüche, wobei es mit einer am Schaftteil (20) angeschraubten Mutter (40) vorliegt, die eine metallisch blanke Ringfläche (18') des Flansches (12), die den Schaftteil (20) umgibt, abdichtet.

8. Zusammenbauteil (60) bestehend aus einem Blechteil (72) und einem Funktionselement (10) nach einem der vorhergehenden Ansprüche, wobei das Blechteil (72) im Bereich des angebrachten Funktionselements (10) im Vergleich zu der Blechteilstärke radial außerhalb des angebrachten Funktionselements (10) eine Verdickung (106) aufweist, der genannte Abschnitt (16) im Bereich der Verdickung (106) und am freien Ende in aufgeweiteter Form (16') formschlüssig aufgenommen ist, ohne das Blechteil (72) zu durchdringen, und dass das Blechmaterial sowohl außerhalb des aufgeweiteten Abschnitts (16') als auch innerhalb dieses in Eingriff mit dem aufgeweiteten Abschnitt (16') wie auch im Eingriff mit den Kerben (26, 26') steht, sei sie außerhalb oder innerhalb des aufgeweiteten Abschnitts (16') oder sowohl außerhalb als auch innerhalb dieses Abschnitts.

9. Zusammenbauteil nach Anspruch 8, wobei der Flansch (12) eine den Schaftteil (20) umgebende Ringfläche (18') aufweist, die in einem Abstand vor der dem Schaftteil (20) zugewandten Seite des Blechteils (72) steht.

10. Zusammenbauteil nach einem der Ansprüche 8 oder 9, wobei die Verdickung (106) in der Mitte auf der dem Funktionselement (10) abgewandten Seite und radial innerhalb des aufgeweiteten Abschnitts eine Eindellung (108) aufweist.

11. Zusammenbauteil nach einem der Ansprüche 8 bis 10, wobei das Blechmaterial sich in Eingriff mit den genannten Nasen (58) am Flansch (12) befindet.

## Claims

1. A functional element (10) having a section (16) which has a flange (12), which projects away from a side (14) of the flange (12) and which is adapted for an aperture-free punching into a sheet metal part (72); and having a shaft part (20) which projects away from a side (18) of the flange (12) opposite the first side (14), which satisfies a function and which has a longitudinal axis (22), wherein the flange (12) and the section (16) are arranged at least substantially coaxially to the shaft part (20), wherein the section (16) is configured as a hollow cylinder which has notches (26') extending in parallel with the longitudinal direction at its inner jacket surface and the section (16) has a diverging frustoconical shape (34), which runs out at least substantially at the free end (28) and which serves for the widening of the section (26) on the punching into the sheet metal part, in the region (32) of its free front end (28) at the inner side, preferably in a region (32) directly adjacent to the free end (28) of the section, wherein the notches (26') have a shape which is rounded in cross-section and which in particular corresponds to a semicircular cross-section.

2. A functional element in accordance with claim 1, wherein notches (26) extending in parallel with the longitudinal direction are also provided at the outer jacket surface of the cylinder and have a shape which is rounded in cross-section and which in particular corresponds to a semicircular cross-section.

3. A functional element in accordance with claim 1 or claim 2, wherein the shaft part (20) is adapted to carry out one of the following functions:
attaching a connection terminal or a nut for fastening a connection terminal;
attaching a brake line or a clip for fastening a brake line;
attaching a carpet loop;
attaching a holder; and
attaching a housing of a fixed-vehicle component in which no special demands are made on the strength of the connection, i.e. not for attaching safety-related components.

4. A functional element in accordance with any one of the preceding claims, wherein the named hollow section (16) comprises a cylindrical part (44) adjacent to the free end (28) of the section (16) and a part (46) tapering in the direction toward the cylindrical part (44) between the flange (12) and the cylindrical part (44).

5. A functional element in accordance with any one of the preceding claims, wherein the section (16) is sharp edged or is provided with a small rounded portion at the free end at the transition from the outer side of the cylindrical part (44) with respect to the region having a diverging frustoconical shape (34) and has a radial depth (d) for bounding the diverging frustoconical shape (34) at the free end of the cylinder section which amounts to less than 30% of the maximum wall thickness (w) of the cylinder section (44).

6. A functional element in accordance with any one of the preceding claims, wherein the flange (12) has noses (58) between the notches (26) at the side of the mentioned section (16), wherein the sheet material is in engagement with the noses (58) to achieve an additional security against rotation.

7. A functional element in accordance with any one of the preceding claims, wherein it is present with a nut (40) which is screwed to the shaft part (20) and which seals a metallically blank annular surface (18') of the flange (12) which surrounds the shaft part (20).

8. A component assembly (60) comprising a sheet metal part (72) and a functional element (10) in accordance with any one of the preceding claims, wherein the sheet metal part (72) has a thickened portion (106) in the region of the attached functional element (10) in comparison with the sheet metal part thickness radially outside the attached functional element (10), wherein the named section (16) is received with shape matching in a widened form (16') in the region of the thickened portion (106) and at the free end without penetrating the sheet metal part (72), and wherein the sheet metal material is in engagement with the widened section (16') both outside the widened section (16') and within it and is also in engagement with the notches (26, 26'), whether outside or inside the widened section (16') or both outside and inside this section.

9. A component assembly in accordance with claim 8, wherein the flange (12) has an annular surface (18') which surrounds the shaft part (20) and which is at a spacing in front of the side of the sheet metal part (72) facing the shaft part (20).

10. A component assembly in accordance with one of the claims 8 or 9, wherein the thickened portion (106) has an indentation (108) at the center at the side remote from the functional element (10) and radially within the widened section.

11. A component assembly in accordance with any one of the claims 8 to 10, wherein the sheet metal material is in engagement with the named noses (58) at the flange (12).

## Revendications

1. Elément fonctionnel (10) comprenant un tronçon (16) qui présente une bride (12) et se projette en éloignement d'un côté (14) de la bride (12) et est conçu pour le poinçonnage dans une pièce en tôle (72) sans la percer, ainsi qu'une partie de tige (20) d'axe longitudinal (22) qui se projette en éloignement d'un côté (18) de la bride (12) opposé au premier côté (14) et satisfait une fonction,
dans lequel
la bride (12) et le tronçon (16) sont disposés au moins sensiblement coaxia-lement à la partie de tige (20),
le tronçon (16) est réalisé sous la forme d'un cylindre creux qui présente, sur sa surface enveloppe intérieure, des encoches (26') s'étendant parallèlement à la direction longitudinale, et
le tronçon (16) présente, dans la zone (32) de son extrémité frontale libre (28), sur le côté intérieur, de préférence dans une zone (32) directement adjacente à l'extrémité libre (28) du tronçon, une forme tronconique divergente (34) se terminant au moins sensiblement à l'extrémité libre (28), qui sert à l'évasement du tronçon (16) lors du poinçonnage dans la pièce en tôle, et
les encoches (26') ont une forme arrondie en section transversale qui correspond en particulier à une section transversale semi-circulaire.

2. Elément fonctionnel selon la revendication 1,
dans lequel des encoches (26) s'étendant parallèlement à la direction longitudinale sont prévues également sur la surface enveloppe extérieure dudit cylindre, qui présentent une forme arrondie en section transversale qui correspond en particulier à une section transversale semi-circulaire.

3. Elément fonctionnel selon la revendication 1 ou 2,
dans lequel la partie de tige (20) est conçue pour réaliser l'une des fonctions suivantes :
la mise en place d'une borne de connexion ou d'un écrou pour fixer une borne de connexion,
la mise en place d'une conduite de frein ou d'un clip pour fixer une conduite de frein,
la mise en place d'un œillet de tapis,
la mise en place d'un élément de maintien,
la mise en place d'un boîtier d'un composant solidaire d'un véhicule, pour lequel aucune exigence particulière n'est posée en matière de résistance de la liaison, c'est-à-dire non pas pour la mise en place de composants de sécurité.

4. Elément fonctionnel selon l'une des revendications précédentes, dans lequel ledit tronçon creux (16) est constitué d'une partie cylindrique (44) adjacente à l'extrémité libre (28) du tronçon (16) et d'une partie (46) se rétrécissant en direction de la partie cylindrique (44) entre la bride (12) et la partie cylindrique (44).

5. Elément fonctionnel selon l'une des revendications précédentes, dans lequel, à l'extrémité libre, à la transition du côté extérieur de la partie cylindrique (44) vers la zone présentant une forme tronconique divergente (34), le tronçon (16) est pourvu d'arêtes vives ou d'un petit arrondi et présente une profondeur radiale (d) pour délimiter la forme tronconique divergente (34) à l'extrémité libre du tronçon cylindrique, qui est inférieure à 30 % de l'épaisseur maximale (w) de la paroi du tronçon cylindrique (44).

6. Elément fonctionnel selon l'une des revendications précédentes, dans lequel, du côté (14) dudit tronçon (16), la bride (12) présente des ergots (58) entre les encoches (26), le matériau de tôle étant en prise avec les ergots (58) pour obtenir un blocage anti-rotation supplémentaire.

7. Elément fonctionnel selon l'une des revendications précédentes,
se présentant avec un écrou (40) qui est vissé sur la partie de tige (20) et assure l'étanchéité d'une surface annulaire (18') métallique nue de la bride (12), surface qui entoure la partie de tige (20).

8. Pièce d'assemblage (60) constituée d'une pièce en tôle (72) et d'un élément fonctionnel (10) selon l'une des revendications précédentes,
dans laquelle
dans la zone de l'élément fonctionnel (10) mis en place, la pièce en tôle (72) présente un renflement (106) par rapport à l'épaisseur de la pièce en tôle radialement à l'extérieur de l'élément fonctionnel (10) mis en place, ledit tronçon (16) est reçu sous forme évasée (16') par coopération de forme dans la zone du renflement (106) et à l'extrémité libre, sans traverser la pièce en tôle (72), et
le matériau de tôle est en prise avec le tronçon évasé (16') aussi bien à l'extérieur du tronçon évasé (16') qu'à l'intérieur de celui-ci, et est en prise avec les encoches (26, 26'), qu'elles soient à l'extérieur ou à l'intérieur du tronçon évasé (16') ou à la fois à l'extérieur et à l'intérieur dudit tronçon.

9. Pièce d'assemblage selon la revendication 8,
dans laquelle la bride (12) présente une surface annulaire (18') qui entoure la partie de tige (20) et se trouve à une certaine distance en avant du côté de la pièce en tôle (72) tourné vers la partie de tige (20).

10. Pièce d'assemblage selon l'une des revendications 8 ou 9,
dans laquelle le renflement (106) présente un renfoncement (108) au centre du côté détourné de l'élément fonctionnel (10) et radialement à l'intérieur du tronçon évasé.

11. Pièce d'assemblage selon l'une des revendications 8 à 10,
dans laquelle le matériau de tôle est en prise avec lesdits ergots (58) sur la bride (12).
